# EUROPEAN PATENT SPECIFICATION

(11) **EP 3 345 885 B1**
(45) Date of publication and mention of the grant of the patent: **15.07.2020**
(21) Application number: 16841392.0
(22) Date of filing: 03.08.2016
(51) Int. Cl.: C04B 38/10, C01B 25/32, C01F 11/18, C04B 35/057, C04B 35/447, C04B 41/80, C04B 41/85, C01B 25/16, C04B 111/00

(54) **METHOD FOR MANUFACTURING POROUS MATERIAL INCLUDING CALCIUM CARBONATE AND METHOD FOR MANUFACTURING POROUS MATERIAL INCLUDING CARBONATE APATITE**
VERFAHREN ZUR HERSTELLUNG EINES PORÖSEN KÖRPERS MIT CALCIUMCARBONAT UND VERFAHREN ZUR HERSTELLUNG EINES PORÖSEN KÖRPERS MIT CARBONAPATIT
PROCÉDÉ DE PRODUCTION D'UN CORPS POREUX CONTENANT DU CARBONATE DE CALCIUM ET PROCÉDÉ DE PRODUCTION D'UN CORPS POREUX CONTENANT UNE APATITE-CARBONATE

(30) Priority: 31.08.2015 JP 2015171064
(43) Date of publication of application: 11.07.2018
(73) Proprietor: GC Corporation, Bunkyo-ku Tokyo 113-0033 (JP)
(72) Inventor: SAKAI, Yuuhiro, Tokyo 174-8585 (JP); YAMANAKA, Katsuyuki, Tokyo 174-8585 (JP); SHIGEMITSU, Yusuke, Tokyo 174-8585 (JP)
(74) Representative: Müller-Boré & Partner Patentanwälte PartG mbB
(86) International application number: PCT/JP2016/072844
(87) International publication number: WO 2017/038360

(56) References cited:
- EP-A1- 1 712 523
- WO-A1-2004/112856
- WO-A1-2016/052502
- JP-A- H1 036 106
- JP-A- H08 268 717
- JP-A- S50 117 698
- JP-A- S50 117 698
- JP-A- 2002 348 182
- JP-A- 2012 066 952
- JP-A- 2014 177 363
- JP-A- 2014 177 363
- US-A1- 2011 295 383
- SHIGEKI MATSUYA ET AL.: 'Tansan Calcium no Rinsanka ni yoru Tansan Apatite Kokatai no Chosei' THE JOURNAL OF THE JAPANESE SOCIETY FOR DENTAL MATERIALS AND DEVICES vol. 22, no. 5, 25 August 2003, page 406, XP009508783

## Description

### [Technical Field]

The present invention relates to a method for manufacturing a porous material including a calcium carbonate and a method for manufacturing a porous material including a carbonate apatite.

### [Background Art]

A bone substitute material has been usually used for reconstruction or reproduction of a bone that has been lost due to an external injury, etc., or for increasing thickness of a jawbone for an implant treatment.

As a bone substitute material, for example, hydroxyapatite has been studied.

A bone substitute material using hydroxyapatite has an osteoconductive property, namely, the bone substitute material has a capability such that, when it is supplied to a defective part of a bone, it activates cells that make a bone and that are present in a mother floor bone so as to cause a bone tissue to be newly formed and a bone to be formed on a surface of the bone substitute material.

As for the property of a bone substitute material, a property to be replaced with a bone is required, in addition to the above-described osteoconductive property. For a bone substitute material using hydroxyapatite, a bone is formed by osteoblastic cells; however, the bone substitute material is not absorbed by osteoclasts, so that the bone substitute material is not to be replaced with a bone.

As a material of a bone substitute material having an osteoconductive property that can also be replaced with a bone, carbonate apatite has been focused on.

As a method for manufacturing a bone substitute material using carbonate apatite, for example, Patent Document 1 discloses a method for manufacturing a medical bone substitute material that includes carbonate apatite as a main component. The medical bone substitute material is characterized in that at least one of a block of calcium compound, which substantially does not include powder nor a solution including phosphate, includes a carbonate group; and that carbonate apatite is generated by contacting the block calcium compound and the solution including phosphate, without performing sintering.

Further, Patent Document 1 discloses a specific example of a method for manufacturing a medical bone substitute material that includes carbonate apatite as a main component. According to the disclosed example, first, calcium hydroxide, as a block of calcium compound, is compression molded using a circular metal mold, and a calcium carbonate block is obtained by carbonating the obtained green compact under a carbon dioxide flow with relative humidity of 100%. It is described that, then, the block of calcium carbonate is dipped into disodium hydrogen-phosphate to obtain a block body having the same form as the calcium carbonate block.

### [Citation List]

### [Patent Literature]

[PTL 1]
Japanese Patent No. 4854300

### [Summary of Invention]

### [Technical Problem]

In the method for manufacturing a medical bone substitute material specifically disclosed in Patent Document 1, a calcium carbonate block body is used. Accordingly, a carbonate apatite block body is obtained that is the same form as the calcium carbonate block body.

When a bone substitute material is formed to be a porous material and then supplemented to a defective part of a bone, a favorable bone reproduction in a shorter term can be expected because cells, blood vessels, and so forth get inside the bone substitute material. For this reason, as a bone substitute material, a porous material including carbonate apatite is required, and, in order to form such a porous material including carbonate apatite, a porous material including a calcium carbonate is required.

The present invention is achieved in view of the problem with the above-described related technique; and in an aspect of the present invention, an object is to provide a method for manufacturing a porous material including a calcium carbonate.

European Patent Application EP1712523 discloses a method for the formation of porous calcium carbonate for use in paper coatings comprising mixing calcium dioxide and water, performing a slaking reaction and subjecting the slaked slurry to a carbonation step by contacting it with a gaseous flow of carbon dioxide.

Similarly, Japanese Patent application JP S50 117698A1 also anticipates a method for producing calcium carbonate by subjecting a mixture of water and quicklime so as to obtain a slurry and performing a carbonation step with gaseous carbon dioxide.

### [Solution to Problem]

According to an embodiment of the present invention, there is provided a method for manufacturing a porous material including a calcium carbonate, the method including a digestion carbonation process of causing digestion and carbonation of a porous material including a calcium oxide in a presence of gaseous water under a flow of a gas including carbon dioxide.

### [Advantageous Effects of Invention]

According to an embodiment of the present invention, a method for manufacturing a porous material including a calcium carbonate can be provided.

### [Method for manufacturing a porous material including a calcium carbonate]

In this embodiment, an example of a configuration of a method for manufacturing a porous material including a calcium carbonate is described.

The method for manufacturing a porous material including a calcium carbonate according to the embodiment comprises a digestion carbonation process of causing digestion and carbonation of a porous material including a calcium oxide in a presence of gaseous water under a flow of a gas including carbon dioxide.

As described above, as a bone substitute material, a porous material including carbonate apatite is required, and, in order to form such a porous material including carbonate apatite, a porous material including a calcium carbonate is required. Accordingly, the inventors of the present invention have intensively studied on a method for manufacturing a porous material including a calcium carbonate.

First, a method was studied that was for carbonating a porous material of calcium hydroxide by a carbonation reaction of calcium hydroxide (reaction formula: Ca(OH)₂ + CO₂ → CaCO₃ + H₂O), after forming a porous material of calcium hydroxide using calcium hydroxide as a starting material. However, with such a method, no porous material including a calcium carbonate was formed that is provided with porosity and uniform communicating porousness sufficient to be used as a bone substitute material.

Next, it was studied to obtain a porous material of calcium hydroxide by a digestion reaction of a calcium carbonate (reaction formula: CaO + H₂O → Ca(OH)₂) by contacting a porous material of a calcium oxide and water or a solution including water, or by dipping the porous material of the calcium oxide in water or the solution including water, after forming the porous material of the calcium oxide using the calcium oxide as a starting material. Although various conditions were studied, no porous material of calcium hydroxide was obtained that maintains a structure of a porous material of calcium hydroxide because of collapsing of a fragile porous structure of calcium hydroxide. A main cause was considered to be that the digestion reaction was accompanied by large heat generation and volume expansion.

After studying further, it has been found that, while maintaining a structure of a porous material including a calcium oxide, which is a starting material, a desired porous material including calcium carbonate can be obtained, by carbonating the porous material of the calcium oxide by a reaction method in which a digestion reaction (which is accompanied by volume expansion) and a carbonation reaction (which is accompanied by volume reduction) are simultaneously caused after forming the porous material of the calcium oxide. Thereby the present invention has been accomplished.

As described above, a method of manufacturing a porous material including a calcium carbonate according to the embodiment comprises a digestion carbonation process of causing digestion and carbonation (which is denoted as digestion-carbonation, hereinafter) of a porous material including a calcium oxide in a presence of water gaseous under an air flow including carbon dioxide.

A composition, a pore size, porosity, and so forth of the porous material including the calcium oxide supplied to the digestion carbonation process are not particularly limited; and they can be freely selected depending on a property required for the porous material including the calcium carbonate. However, content of the calcium oxide within the porous material including the calcium oxide may preferably be high; and, for example, the content may preferably be greater than or equal to 90% by mass, and the content may more preferably be greater than or equal to 99% by mass. In particular, as the porous material including the calcium oxide, a porous material formed of a calcium oxide is more preferable. However, even in this case, for example, less than 1% by mass of an unavoidable component may be included, such as a foreign material mixed during preparation of the porous material formed of the calcium oxide.

As for the presence of water in the digestion carbonation process, it suffices if water exists around the porous material including the calcium oxide to be carbonated, regardless of the state of the water. However, if the digestion carbonation process is caused under an environment in which only liquid water is present, e.g., a porous material including a calcium oxide is dipped into water, only the digestion reaction is caused, and the structure of the porous material may collapse.

For this reason, in the digestion carbonation process, an existence condition of water may preferably be selected, so that the digestion reaction and the carbonation reaction coexist, and rapid progress of the digestion reaction can be prevented. Specifically, a digestion carbonation process of a porous material including a calcium oxide is caused under an environment in which gaseous water is included. In particular, the digestion carbonation process of the porous material including the calcium oxide may preferable be caused under a high humidity environment, namely, under the environment in which the gaseous water is present. Note that, when the digestion carbonation process of the porous material including the calcium oxide is caused under a high humidity environment, gaseous water and liquid water may coexist.

Specifically, for example, the digestion carbonation process may preferably caused under an atmosphere in which relative humidity is greater than or equal to 60%, and the digestion carbonation process may more preferably caused under an atmosphere in which the relative humidity is greater than or equal to 80%.

In the digestion carbonation process, digestion-carbonation of the porous material including the calcium oxide is may caused in presence of gaseous water under a current of a carbon dioxide-containing gas. It suffices if the carbon dioxide-containing gas includes carbon dioxide; and the specific composition of the gas is not particularly limited. However, in order to sufficiently increase a reaction rate of the digestion-carbonation of the porous material including the calcium oxide in the digestion carbonation process, for example, the concentration of carbon dioxide in the carbon dioxide-containing gas may preferably be greater than or equal to 1 vol%, more preferably greater than or equal to 10 vol%.

An upper limit of the concentration of carbon dioxide included in the carbon dioxide-containing gas is not particularly limited; and it may be less than or equal to 100 vol% because the carbon dioxide-containing gas may be formed exclusively of carbon oxide. However, even if the concentration of carbon dioxide included in the carbon dioxide-containing gas is adjusted to be greater than 20 vol%, there is no significant difference in the reaction rate of the digestion carbonation reaction of the porous material including the calcium oxide. Accordingly, the concentration of carbon dioxide included in the carbon dioxide-containing gas may be adjusted to be less than or equal to 20 vol%.

A gas component included in the carbon dioxide-containing gas other than carbon dioxide is not particularly limited; and any other gas may be included. For example, as a component included in the carbon dioxide-containing gas other than the carbon dioxide gas, there are the air, an inert gas, and so forth. In particular, if it is required to suppress occurrence of a reaction other than the digestion-carbonation of the porous material including the calcium oxide, the component included in the carbon dioxide-containing gas other than carbon dioxide may preferably be an inert gas. When the component included in the carbon dioxide-containing gas other than carbon dioxide is an inert gas, for example, the inert gas may preferably be one or more types of gases selected from nitrogen, argon, and helium.

Various reaction conditions in the digestion carbonation process, such as a reaction temperature and a reaction time, are not particularly limited. However, if the reaction temperature is too low, the reaction rate of the digestion-carbonation may be decreased. Furthermore, if the reaction temperature is too high, the volume expansion due to the digestion reaction occurs suddenly, and the porous structure tends to collapse; or a ratio of an elimination reaction of a carbon dioxide from a surface of the digestion-carbonation reacted porous material including the calcium oxide becomes large, and an apparent reaction rate may be decreased. Accordingly, the reaction temperature may preferably be greater than or equal to 0 °C and less than or equal to 250 °C; more preferably greater than or equal to 20 °C and less than or equal to 50 °C. Note that the reaction temperature here implies a temperature in a vicinity of the porous material including the calcium oxide.

Additionally, the reaction time is not particularly limited, and the reaction time may be selected depending on the size and porosity of the porous material including the calcium oxide to be supplied to the digestion carbonation reaction, a flow rate of the carbon dioxide-containing gas, and so forth, so that the digestion-carbonation can be sufficiently promoted at least on the surface of the porous material including the calcium oxide.

The method for manufacturing the porous material including the calcium carbonate according to the embodiment may further include an optional process other than the digestion carbonation process described above. Examples of such a process are described below.

As described above, the digestion carbonation process is caused in presence of gaseous water under a current of the carbon dioxide-containing gas. In such a digestion carbonation process, the digestion-carbonation can be promoted at least on the surface of the porous material including the calcium oxide; however, the digestion-carbonation may not be sufficiently promoted at an inner part of the porous material including the calcium oxide at which the porous material does not directly contact water and the carbon dioxide-containing gas. It is undesirable for calcium oxide to remain at the inner part, so that the digestion reaction may preferably be completely progressed. When the digestion carbonation reaction is insufficient and calcium hydroxide remains, the calcium hydroxide can be converted into hydroxyapatite by a phosphorylation process described below. Accordingly, it suffice if the the carbonation reaction is incomplete; however, it is more preferable that the carbonation reaction be completed. In this manner, when the progress of the digestion carbonation reaction is incomplete, for example, after completing the digestion carbonation reaction, a dipping process may be executed in which the porous material including the calcium oxide to which the digestion-carbonation is applied is dipped into a sodium hydrogen carbonate solution. It is preferable to execute the dipping process because the digestion-carbonation can be completely progressed up to the inner part of the porous material including the calcium oxide.

Additionally, the method for manufacturing the porous material including the calcium carbonate according to the embodiment may further include the following processes. By executing the following processes, a porous material including a calcium oxide can be manufactured, which is to be supplied to the above-described digestion carbonation process.

A slurry preparation process of preparing a slurry by mixing a calcium hydroxide and/or calcium carbonate, an organic material that can be solidified by a chemical reaction, and a solvent. A bubble introduction process of introducing bubbles into the slurry. A solidifying process of solidifying the slurry by causing the organic material to be chemically reacted. A slurry sintering process of sintering the solidified slurry to obtain a porous material including the calcium oxide.

Each of the processes is described below.

In the slurry preparation process, by mixing a calcium hydroxide and/or calcium carbonate, an organic material that can be solidified by a chemical reaction, and a solvent, the calcium hydroxide and/or calcium carbonate mixed with the solvent can be dispersed, and thereby a slurry can be prepared.

As a calcium source, the calcium hydroxide and/or calcium carbonate may be used. Namely, as a calcium source, only one of the calcium hydroxide and the calcium carbonate may be used, or both of them may be used. Note that, as the calcium source, a calcium compound other than the calcium hydroxide and/or calcium carbonate may additionally be used; and, for example, a calcium oxide may be additionally used.

Further, as the chemical reaction of the organic material that can be solidified by the chemical reaction, for example, there are a polymerization reaction and a crosslinking reaction. Furthermore, the organic material that can be solidified by the chemical reaction is not particularly limited, and organic materials that can be solidified by various types of chemical reactions can be used. For example, one or more types of organic materials can be used that are selected from polyvinyl alcohol, (meth) acrylate such as methyl methacrylate, methyl cellulose, polyacrylamide, polyethyleneimine, polypropylene imine, polybutyleneimine, and so forth. In particular, a polymer including an amino group in a linear form, a branched form, or a blocked form can more preferably be used because it is rich in a cationic property, it can contribute further to the dispersion of the raw material powder so as to manufacture a favorable slurry, and it can be used in combination with a reaction initiator described below to obtain a solidified product.

The solvent is not particularly limited, and water may be used, for example. In particular, from a perspective of preventing a foreign material from being mixed, distilled water can preferably be used.

In the slurry preparation process, various types of additives may further be mixed. As the additives, for example, dispersants, foam stabilizers, thickener, and so forth may be used.

In the bubble introduction process, bubbles can be introduced into the slurry that is manufactured in the slurry preparation process. Namely, the slurry can be bubbled.

In the bubble introduction process, the bubbles are introduced to form pores of the porous material including the calcium oxide and pores of the porous material including the calcium carbonate that is obtained from the porous material including the calcium oxide. For this reason, a size and an addition amount of the bubbles may preferably be adjusted depending on the size of the pores, the porosity, and so forth of the desired porous material including the calcium carbonate.

The method for introducing the bubbles into the slurry is not particularly limited. For example, the bubbles can be introduced by mixing a foaming agent and the slurry and stirring them. Alternatively, air bubbles may be introduced by supplying a gas into the slurry. Mixing and stirring of the foaming agent and supply of the gas into the slurry may be used in combination.

When a foaming agent is used in the bubble introduction process, the foaming agent is not particularly limited. Various anionic, cationic, amphoteric, or nonionic surfactants may be used. However, when a polymer including an amino group in a linear form, a branched form, or a blocked form, such as polyacrylamide, is used as the organic material that can be solidified by the chemical reaction, if an anionic surfactant is used, an ion complex is formed due to the difference in ionicity, and the bubble forming operation may become difficult. For this reason, when a polymer including an amino group in a linear form, a branched form, or a blocked form is used, a surfactant other than an anionic surfactant may preferably be used.

As the foaming agent, for example, polyoxyethylene lauryl ether, triethanolamine sulfate, and so forth may preferably be used.

In the solidifying process, by mixing the reaction initiator and the slurry, the organic material that can be solidified by a chemical reaction can be caused to be chemically reacted, and they can be solidified.

The reaction initiator is not particularly limited; and a material may be used that can chemically react with the organic material that can be solidified by the chemical reaction used in the slurry preparation process. As the reaction initiator, for example, there are a crosslinking agent and a polymerization initiator.

For example, when an organic material including an amino group, such as polyacrylamide, polyethyleneimine, polypropylene imine, and polybutyleneimine, is used as the organic material that can be solidified by the chemical reaction, an epoxy compound including two or more epoxy groups, such as sorbitol polyglycidyl ether, polyglycerol polyglycidyl ether, pentaerythritol polyglycidyl ether, diglycerol polyglycidyl ether, griscerol polyglycidyl ether, and polymethylolpropane polyglycidyl ether, may preferably be used as the crosslinking agent.

Note that, by mixing the reaction initiator and the slurry in the solidifying process, they can be solidified into a gel. For this reason, it is preferable to prepare, prior to executing the solidifying process, a mold corresponding to the shape required for the porous material including the calcium oxide and a calcium carbonate porous material obtained from the porous material including the calcium oxide. Then, it is preferable to execute the solidifying process by pouring the slurry into the prepared mold prior to executing the solidifying process and mixing the reaction initiator with the slurry inside the mold.

Then, the slurry sintering process can be executed in which the slurry solidified in the solidifying process is sintered to obtain the porous material including the calcium oxide.

By sintering the solidified slurry, the organic material that can be solidified by the chemical reaction, the solvent, and so forth, which are included in the slurry, can be burned to be removed, and the calcium hydroxide and/or calcium carbonate included in the slurry can be converted into the calcium oxide. The sintering condition in the slurry sintering process is not particularly limited; however, it may preferably be heated with a temperature that is greater than or equal to 500 °C and less than or equal to 1200 °C. The reason is that, if it is less than 500 °C, it takes time to remove the organic material that can be solidified by the chemical reaction, the organic solvent, and so forth, and the productivity may be lowered. Further, even if it is heated to a temperature higher than 1200 °C, there is no significant effect for enhancing the reaction rate of the above-described reaction. Accordingly, the temperature may preferably be less than or equal to 1200 °C.

The atmosphere for heating the solidified slurry is not particularly limited; and the atmosphere may be an atmospheric atmosphere or a vacuum atmosphere. Additionally, heating of the solidified slurry may be executed under a current of an oxygen-containing gas, such as the air, or various types of gasses, such as an inert gas.

In particular, from a perspective of promoting removal of the organic material that can be solidified by the chemical reaction, the solvent, and so forth, heating may preferably be executed in a vacuum atmosphere, or under the currents of the various types of gasses.

The time interval for heating is not particularly limited, and it can be freely selected depending on the size, etc., of the solidified slurry.

By executing the above-described slurry preparation process, the bubble introduction process, the solidifying process, and the slurry sintering process, the porous material including the calcium oxide can be manufactured. Then, by supplying the obtained porous material including the calcium oxide to the above-described digestion carbonation process, the porous material including the calcium carbonate can be manufactured.

The method for manufacturing the porous material including the calcium carbonate according to the embodiment may further include a crushing process, in addition to the above-described processes. The crushing process is a process for crushing the solidified product on or after the solidifying process, and the crushing process may be executed at any timing on or after the above-described solidifying process. The size to be crushed is not particularly limited; however, considering a yield rate and reaction efficiency in the digestion carbonation process and the subsequent phosphorylation process, the size may preferably be less than or equal to 20 cm × 20 cm × 20 cm; and the size may be more preferably less than or equal to 5 cm × 5 cm × 5 cm. Note that, in the crushing process (cutting process), the solidified product may be crushed; or the solidified product may be cut by a cutter, etc., to be a desired shape and size.

By the method for manufacturing the porous material including the calcium carbonate according to the embodiment described above, a porous material including a calcium carbonate can be manufactured.

According to the method for manufacturing the porous material including the calcium carbonate according to the embodiment, a porous material including a calcium carbonate that maintains a structure of the porous material including the calcium oxide can be manufactured because the digestion-carbonation is caused by supplying water and carbon dioxide after forming the porous material including the calcium oxide.

Further, the porous material including the calcium carbonate according to the embodiment is formed by causing the digestion-carbonation of the porous material including the calcium oxide, which is obtained by solidifying a foamed slurry formed by introducing bubbles and then sintering it. For this reason, communicating spherical pores can be included.

### [Method for manufacturing a carbonate apatite porous material]

Next, an example of a configuration of the method for manufacturing the porous material including a carbonate apatite according to the embodiment is described below.

In the method for manufacturing the porous material including the carbonate apatite according to the embodiment, a porous material including a carbonate apatite can be manufactured using the porous material including the calcium carbonate obtained by the above-described method for manufacturing the porous material including the calcium carbonate.

Accordingly, the method for manufacturing the porous material including the carbonate apatite according to the embodiment may include the following processes.

A process of manufacturing a porous material including a calcium carbonate using the method for manufacturing the porous material including the calcium carbonate according to claims 1 and 2; and.

A phosphorylation process of obtaining a porous material including a carbonate apatite by processing the porous material including the calcium carbonate with phosphoric acid.

The digestion carbonation process can be executed similar to the above-described method for manufacturing the porous material including the calcium carbonate. Accordingly, the description is omitted here.

In the phosphorylation process, by processing the porous material including the calcium carbonate with phosphoric acid, a porous material including a carbonate apatite can be obtained.

The phosphorylation process can be executed, for example, by contacting the porous material including calcium carbonate with a phosphoric acid solution or a phosphate-containing solution (which is also denoted as the phosphate-containing solution, etc.). The phosphate-containing solution, etc., is not particularly limited; however, a phosphoric acid or a solution of a phosphate may preferably be used, such as phosphoric acid, triammonium phosphate, tripotassium phosphate, trisodium phosphate, disodium ammonium phosphate, diammonium phosphate, ammonium dihydrogen phosphate, potassium dihydrogen phosphate, sodium dihydrogen phosphate, phosphoric acid trimagnesium, sodium ammonium hydrogenphosphate, diammonium hydrogenphosphate, dipotassium hydrogenphosphate, disodium hydrogenphosphate, magnesium hydrogenphosphate tridiacetyl phosphate, diphenyl phosphate, dimethyl phosphate, cellulose phosphate, ferrous phosphate, ferric phosphate, tetrabutylammonium phosphate, copper phosphate, triethyl phosphate, tricresyl phosphate, tristrimethylsilyl phosphate, triphenyl phosphate, tributyl phosphate, trimethyl phosphate, guanidine phosphate, and cobalt phosphate.

Note that the phosphate included in the phosphate-containing solution is not limited to one type, and two or more type of phosphates may be included. Further, a solvent of the phosphoric acid solution and the phosphate solution is not particularly limited; however, water may be used, for example. Accordingly, for example, a phosphoric acid aqueous solution and a phosphate-containing aqueous solution may be used as the phosphoric acid solution and the phosphate solution, respectively.

The method of contacting the porous material including the calcium carbonate with the phosphate-containing solution is not particularly limited; and, for example, it can be executed by dipping the porous material including the calcium carbonate into the phosphate-containing solution. Other than the above-described method, a method may be used, such as a method of applying the phosphate-containing solution, etc., to the porous material including the calcium carbonate by a spray, etc.

In particular, in order to ensure that the phosphate-containing solution, etc., contacts the entire surface of the porous material including the calcium carbonate, the porous material including the calcium carbonate may preferably dipped into the phosphate-containing solution, etc., so that the porous material including the calcium carbonate contacts the phosphate-containing solution, etc.

The temperature for contacting the porous material including the calcium carbonate with the phosphate-containing solution, etc., is not particularly limited; however, for example, the temperature may preferably be higher than or equal to 50 °C, and the temperature may more preferably be higher than or equal to 80 °C.

The reason is that the carbonate apatite can be quickly formed at a higher temperature. In particular, it is preferable to cause a reaction at a temperature higher than or equal to 100 °C using a hydrothermal reaction because the carbonate apatite can be more reliably formed up to the inner part of the porous material.

Note that the carbonate apatite formed at the phosphorylation process means an apatite in which a part of or all of the phosphate groups or the hydroxyl groups of the hydroxyapatite represented by Ca₁₀(PO₄)₆(OH)₂ are replaced with carbonate groups. An apatite in which the phosphoric acid groups are replaced with the carbonate groups is called a B-type carbonate apatite; and an apatite in which the hydroxyl groups are replaced with the carbonate groups is called an A-type carbonate apatite.

The method for manufacturing the porous material including the carbonate apatite according to the embodiment may further include optional processes other than the digestion carbonation process and the phosphorylation process, which are described above. In the following, examples of the processes are described.

As described in the method for manufacturing the porous material including the calcium carbonate, in the digestion carbonation process, the digestion-carbonation can be promoted at least on the surface of the porous material including the calcium oxide; however, the digestion-carbonation may not be sufficiently progressed at an inner part of the porous material including the calcium oxide that does not directly contact the water and the carbon dioxide-containing gas. It is undesirable that the calcium oxide remains at the inner part, and the digestion reaction may preferably be progressed completely. In contrast, when the carbonation reaction is incomplete and the calcium hydroxide remains, it suffices if the carbonation reaction is incomplete because the calcium hydroxide can be replaced with the hydroxyapatite by the above-described phosphorylation process; however, it is more preferable that the carbonation be completed. As described above, when the progress of the digestion carbonation process is incomplete, for example, a dipping process can be executed in which the porous material including the calcium oxide to which the digestion carbonation process is applied is dipped into an aqueous solution of sodium hydrogen carbonate, after completing the digestion carbonation process and prior to executing the phosphorylation process. The dipping process may preferably be executed because the digestion-carbonation can be completely progressed up to the inner part of the porous material including the calcium oxide.

Note that, as the bone substitute material, it suffices if, at least, the surface of the porous material becomes the carbonate apatite. Accordingly, the above-described dipping process may be optionally executed.

Optionally, the method for manufacturing the porous material including the carbonate apatite according to the embodiment may further include the following process. By executing the following processes, the porous material including the calcium oxide can be manufactured, which is to be supplied to the above-described digestion carbonation process.

A slurry preparation process of preparing a slurry by mixing a calcium hydroxide and/or calcium carbonate, an organic material that can be solidified by a chemical reaction, and a solvent. A bubble introduction process of introducing bubbles into the slurry. A solidifying process of solidifying the slurry by causing the organic material to be chemically reacted. A slurry sintering process of sintering the solidified slurry to obtain a porous material including the calcium oxide.

The above-described processes can be executed similar to the processes described in the method for manufacturing the porous material including the calcium carbonate. Accordingly, the description is omitted here.

By the method for manufacturing the porous material including the carbonate apatite according to the embodiment described above, a porous material including a carbonate apatite can be manufactured.

With the method for manufacturing the porous material including the carbonate apatite according to the embodiment, a porous material including the calcium carbonate can be manufactured in which the structure of the porous material including the calcium oxide is maintained because the digestion-carbonation is caused in presence of water by supplying carbon dioxide to the surface of the porous material including the calcium oxide, after forming the porous material including the calcium oxide. Then, a porous material including calcium phosphate can be manufactured in which the structure of the porous material including the calcium oxide is maintained because the obtained porous material including the calcium carbonate is phosphorylated. Accordingly, by controlling the structure of the calcium oxide that is the starting material, porous materials including calcium carbonates provided with various structures and porous materials including carbonate apatites provided with various structures can be manufactured.

The porous material including calcium phosphate according to the embodiment is obtained by phosphorylating a calcium carbonate formed by applying the digestion-carbonation to the porous material including the calcium oxide that is obtained by solidifying the foamed slurry formed by introducing bubbles and then sintering the solidified foamed slurry. Consequently, it can include communicating spherical pores.

A porous material including a carbonate apatite obtained by the method for manufacturing the porous material including the carbonate apatite according to the embodiment is provided with an osteoconductive property, and the porous material including the carbonate apatite can be replaced with a bone. Accordingly, the porous material including the carbonate apatite can preferably be used as a bone substitute material. In particular, the porous material including the carbonate apatite is a porous material. Thus, when the porous material including the carbonate apatite is supplemented to a defective part of a bone, a favorable bone reproduction in a shorter term can be expected because cells, blood vessels, and so forth get inside the bone substitute material.

### [Examples]

In the following, the present invention is further described in detail by examples of the present invention and reference examples; however, the present invention is not limited in any way by these examples.

### [Example 1]

In this example, a porous material including a calcium carbonate and a porous material including a carbonate apatite were manufactured.

First, a porous material including a calcium carbonate was manufactured by the following procedure.

A slurry was prepared by adding 74 parts by weight of calcium hydroxide powder and 6 parts by weight of polyethyleneimine, which is an organic material that can be solidified by a chemical reaction, to 80 parts by weight of distilled water, which is a solvent, and mixing them (the slurry preparation process).

Next, as a foaming agent, 1 part by weight of polyoxyethylene lauryl ether and 1 part by weight of triethanolamine sulfate, which were surfactants, were added to the obtained slurry, and they were further mixed.

After adding the foaming agent to the slurry and mixing them, bubbles were introduced into the slurry using a hand mixer to obtain a foamed slurry (the bubble introduction process).

The foamed slurry was poured into a mold formed of polyethylene having a size of 10 cm × 10 cm × 5 cm, 2 parts by weight of sorbitol polyglycidyl ether as a crosslinking agent was added, and they were stirred and solidified to obtain a gel (the solidifying process).

The solidified slurry block was cut into 0.5 cm square cubes (the crushing process) and sintered at 1200 °C for 3 hours under a nitrogen atmosphere to obtain a porous material including a calcium oxide (the slurry sintering process). By analyzing the content of the calcium oxide in the porous material including the calcium oxide that was obtained after the slurry sintering process based on a powder X-ray diffraction pattern (Model: Empyrean, manufactured by PANalytical B.V.), it was confirmed that the content was greater than or equal to 99% by weight, and that the other components were from 0.3% by weight to 0.5% by weight.

The obtained porous material including the calcium oxide was placed in a CO₂ incubator (Model: MCO-18AIC, manufactured by Ikemoto Scientific Technology Co., Ltd.) that was maintained at 30 °C with relative humidity of 100%; and digestion and carbonation were caused by placing the porous material including the calcium oxide under a current of a carbon dioxide-containing gas for 7 days while maintaining the above-described relative humidity and temperature (the digestion carbonation process).

Note that, as the carbon dioxide-containing gas, a gas was used such that it included 10 vol% of carbon dioxide and the remainder was the air.

After completion of the digestion carbonation process, the porous material including the calcium oxide to which the digestion carbonation process had been applied was taken out from the CO₂ incubator, and a part of it was cut and evaluated based on a powder X-ray diffraction pattern (Model: Empyrean, manufactured by PANalytical B.V.) and a Fourier transform infrared spectroscopy spectrum (Model: FT/IR-610, manufactured by JASCO Corporation). As a result, it was confirmed that a porous material including a calcium carbonate was obtained that maintained the structure of the porous material including the calcium oxide, which was the starting material.

Next, a porous material including a carbonate apatite was manufactured from the obtained porous material including the calcium carbonate by the following procedure.

By dipping the porous material including the calcium carbonate into a 1 molar concentration aqueous solution of disodium hydrogenphosphate at 60 ° C for 7 days, the porous material including the calcium carbonate was caused to contact a phosphate-containing solution, and thereby a phosphorylation process was executed (the phosphorylation process).

After the phosphorylation process, the porous material obtained by drying was evaluated based on a powder X-ray diffraction pattern and a Fourier transform infrared spectroscopy spectrum. As a result, it was confirmed that the porous material including the carbonate apatite was obtained that maintained the structure of the porous material including the calcium oxide, which was the starting material.

### [Reference example 1]

A porous material including a calcium oxide was obtained by executing the process up to the slurry sintering process by a method that was the same as that of Example 1. The obtained porous material including the calcium oxide was dipped into water at 1 °C, and an attempt was made to obtain a porous material including a calcium hydroxide by the digestion reaction (if a porous material including a calcium hydroxide can be obtained, a calcium carbonate porous material can be obtained by carbonation). However, upon contacting water, the porous material including the calcium oxide reacted severely and collapsed, and the desired calcium carbonate porous material could not be obtained.

### [Reference example 2]

A porous material including a calcium oxide was obtained by executing the process up to the slurry sintering process by a method that was the same as that of Example 1. The obtained porous material including the calcium oxide was dipped into a sodium hydrogen carbonate solution at 1 °C, and an attempt was made to obtain a calcium carbonate porous material by causing the digestion reaction and the carbonation reaction at the same time. Upon contacting the sodium hydrogen carbonate solution, the porous material including the calcium oxide reacted severely and collapsed, and the desired calcium carbonate porous material could not be obtained.

## Claims

1. A method for manufacturing a porous material including a calcium carbonate, the method comprising:
a digestion carbonation process of causing digestion and carbonation of a porous material including a calcium oxide in a presence of gaseous water and under a flow of a gas including carbon dioxide to obtain the porous material including the calcium carbonate.

2. The method for manufacturing the porous material including the calcium carbonate according to claim 1, further comprising:
a slurry preparation process of preparing a slurry by mixing a calcium hydroxide and/or a calcium carbonate, an organic material that can be solidified by a chemical reaction, and a solvent;
a bubble introduction process of introducing bubbles into the slurry;
a solidifying process of solidifying the slurry by causing the organic material to be chemically reacted; and
a slurry sintering process of sintering the solidified slurry to obtain a porous material including a calcium oxide.

3. A method for manufacturing a porous material including a carbonate apatite comprising:
a process of manufacturing a porous material including a calcium carbonate using the method for manufacturing the porous material including the calcium carbonate according to claim 1 or 2; and
a phosphorylation process of processing the porous material including the calcium carbonate by a phosphoric acid to obtain the porous material including the carbonate apatite.

4. The method for manufacturing the porous material including the carbonate apatite according to claim 3, wherein the porous material including the carbonate apatite is a bone substitute material.

## Patentansprüche

1. Verfahren zur Herstellung eines porösen Materials, das ein Calciumcarbonat enthält, wobei das Verfahren umfasst:
ein Aufschlusscarbonatisierungsverfahren des Verursachens des Aufschlusses und der Carbonatisierung eines porösen Materials, das ein Calciumoxid enthält, in einer Gegenwart von gasförmigen Wasser und unter einem Gasstrom, der Kohlenstoffdioxid enthält, um das poröse Material, welches das Calciumcarbonat enthält, zu erhalten.

2. Verfahren zur Herstellung des porösen Materials, welches das Calciumcarbonat enthält, nach Anspruch 1, weiter umfassend:
ein Aufschlämmungsherstellungsverfahren des Herstellens einer Aufschlämmung durch Mischen eines Calciumhydroxids und/oder eines Calciumcarbonats, eines organischen Materials, das durch eine chemische Reaktion verfestigt werden kann, und eines Lösungsmittels;
ein Blaseneinführungsverfahren des Einführens von Blasen in die Aufschlämmung;
ein Verfestigungsverfahren des Verfestigens der Aufschlämmung durch Verursachen, dass das organische Material chemisch umgesetzt wird; und
ein Aufschlämmungssinterverfahren des Sinterns der verfestigten Aufschlämmung, um ein poröses Material zu erhalten, das ein Calciumoxid enthält.

3. Verfahren zur Herstellung eines porösen Materials, das einen Carbonatapatit enthält, umfassend:
ein Verfahren zur Herstellung eines porösen Materials, das ein Calciumcarbonat enthält, unter Verwendung des Verfahrens zur Herstellung des porösen Materials, welches das Calciumcarbonat enthält, nach Anspruch 1 oder 2; und
ein Phosphorylierungsverfahrern des Verarbeitens des porösen Materials, welches das Calciumcarbonat enthält, durch eine Phosphorsäure, um das poröse Material, welches den Carbonatapatit enthält, zu erhalten.

4. Verfahren zur Herstellung des porösen Materials, welches den Carbonatapatit enthält, nach Anspruch 3,
wobei das poröse Material, welches den Carbonatapatit enthält, ein Knochenersatzmaterial ist.

## Revendications

1. Procédé pour fabriquer un matériau poreux incluant un carbonate de calcium, le procédé comprenant :
un processus de digestion-carbonatation consistant à provoquer la digestion et la carbonatation d'un matériau poreux incluant un oxyde de calcium en présence d'eau gazeuse et sous un flux d'un gaz incluant du dioxyde de carbone pour obtenir le matériau poreux incluant le carbonate de calcium.

2. Procédé pour fabriquer le matériau poreux incluant le carbonate de calcium selon la revendication 1, comprenant en outre :
un processus de préparation de suspension consistant à préparer une suspension en mélangeant un hydroxyde de calcium et/ou un carbonate de calcium, un matériau organique qui peut être solidifié par une réaction chimique, et un solvant ;
un processus d'introduction de bulles consistant à introduire des bulles dans la suspension ;
un processus de solidification consistant à solidifier la suspension en amenant le matériau organique à subir une réaction chimique ; et
un processus de frittage de suspension consistant à fritter la suspension solidifiée pour obtenir un matériau poreux incluant un oxyde de calcium.

3. Procédé pour fabriquer un matériau poreux incluant une apatite de carbonate comprenant :
un processus de fabrication d'un matériau poreux incluant un carbonate de calcium à l'aide du procédé de fabrication du matériau poreux incluant le carbonate de calcium selon la revendication 1 ou 2 ; et
un processus de phosphorylation consistant à traiter le matériau poreux incluant le carbonate de calcium par un acide phosphorique pour obtenir le matériau poreux incluant l'apatite de carbonate.

4. Procédé pour fabriquer le matériau poreux incluant l'apatite de carbonate selon la revendication 3, dans lequel le matériau poreux incluant l'apatite de carbonate est un matériau de substitution d'os.
